# EUROPEAN PATENT APPLICATION

(11) **EP 4 844 838 A1**
(43) Date of publication of application: **25.11.2026**
(21) Application number: 24928051.2
(22) Date of filing: 11.09.2024
(51) Int. Cl.: H01M 4/58, H01M 10/0525

(54) **LITHIUM IRON PHOSPHATE POSITIVE ELECTRODE ACTIVE MATERIAL, POSITIVE ELECTRODE PLATE, LITHIUM SECONDARY BATTERY, AND ELECTRICAL DEVICE**

(30) Priority: 06.03.2024 CN 202410256785
(71) Applicant: Contemporary Amperex Technology Co., Limited, Ningde, Fujian 352100 (CN)
(72) Inventor: JIANG, Jihong, Ningde, Fujian 352100 (CN); LIU, Hongyu, Ningde, Fujian 352100 (CN); NI, Huan, Ningde, Fujian 352100 (CN); BIE, Changfeng, Ningde, Fujian 352100 (CN); LI, Xiaojing, Ningde, Fujian 352100 (CN); CHEN, Xudong, Ningde, Fujian 352100 (CN); LIU, Hanlin, Ningde, Fujian 352100 (CN); HUANG, Yang, Ningde, Fujian 352100 (CN)
(74) Representative: Aera A/S
(86) International application number: PCT/CN2024/118313
(87) International publication number: WO 2025/185120

(57) **Abstract**

The present application provides a lithium iron phosphate positive electrode active material, a positive electrode plate, a lithium secondary battery, and an electrical device. The positive electrode active material comprises a lithium iron phosphate base material, the molar ratio of elemental Sn in the lithium iron phosphate base material being 5-15%, and the molar ratio of elemental Ni in the lithium iron phosphate base material being 20-30%. The powder resistivity of the positive electrode active material at 8 MPa is less than or equal to 30 Ω·cm. The lithium iron phosphate positive electrode active material provided by the present application is characterized by high capacity per gram, and batteries prepared therefrom exhibit both good energy density and cycling performance.

## Description

### CROSS-REFERENCE TO RELATED APPLICATIONS

This application claims priority to Chinese Patent Application No. 202410256785.2, filed on March 6, 2024, and entitled "LITHIUM IRON PHOSPHATE POSITIVE ELECTRODE ACTIVE MATERIAL, POSITIVE ELECTRODE PLATE, LITHIUM SECONDARY BATTERY, AND ELECTRICAL DEVICE", which is incorporated herein by reference in its entirety.

### TECHNICAL FIELD

The present application relates to the technical field of secondary batteries, and in particular, to a lithium iron phosphate positive electrode active material, a positive electrode plate, a lithium secondary battery, and an electrical device.

### BACKGROUND

In recent years, with the increasingly wide application range of lithium-ion batteries, lithium-ion batteries are widely used in energy storage power systems such as hydraulic, thermal, wind, and solar power plants, as well as many fields such as electric tools, electric bicycles, electric motorcycles, electric vehicles, military equipment, and aerospace. Due to the great development achieved by lithium-ion batteries, higher requirements are also put forward for their energy density, cycling performance, safety performance, and the like.

As a positive electrode material for lithium-ion batteries, LiFePO₄ has rapidly become a hotspot of global research due to its resource abundance, low price, environmental friendliness, and stable voltage provided by two-phase reactions. Since the gram capacity of lithium iron phosphate is lower than that of ternary materials, in recent years, improving the capacity utilization of lithium iron phosphate has become a major research focus in recent years. However, focusing only on improving the capacity performance of lithium iron phosphate inevitably sacrifices other performance of batteries, such as cycling performance, processing performance, and the like.

### SUMMARY

The present application is made in view of the foregoing problems, and an objective thereof is to provide a lithium iron phosphate positive electrode active material having a high gram capacity. A battery prepared therefrom is capable of having good energy density, cycling performance, and processing performance at the same time.

In order to achieve the above objective, a first aspect of the present application provides a lithium iron phosphate positive electrode active material. The positive electrode active material includes a lithium iron phosphate base material. A molar percentage of elemental Sn in the lithium iron phosphate base material is 5%-15%, and a molar percentage of elemental Ni in the lithium iron phosphate base material is 20%-30%. A powder resistivity of the positive electrode active material under 8 MPa is ≤30 Ω·cm.

Introducing the elemental Sn and the elemental Ni in the above content ranges into the lithium iron phosphate base material can significantly improve the gram capacity of the positive electrode active material. Meanwhile, the surface of the lithium iron phosphate base material is also coated with a complete and dense carbon coating layer, and the positive electrode active material has a low powder resistivity. Therefore, a battery prepared using the positive electrode active material in the present application can have both better energy density and cycling performance.

In any embodiment, the lithium iron phosphate base material has a molecular formula of LiₐFe_{b}P_{c}O_{d}SnₓNi_{y}Q_{q}, where Q includes at least one of V, Ti, Cu, Cr, Zn, Pb, Ca, Co, Sr, and Nb, 0.99≤a≤1, 0.545≤b≤0.9, 0.99≤c≤1, 3.9≤d≤4, 0.05≤x≤0.15, 0.20≤y≤0.30, and 0≤q≤0.008.

After introducing the elemental Sn and the elemental Ni into the lithium iron phosphate base material, further introducing at least one of elementals such as V, Ti, Cu, Cr, Zn, Pb, Ca, Co, Sr, and Nb can further improve the gram capacity of the positive electrode active material, thereby making the prepared battery have better energy density.

In any embodiment, the molar percentage of elemental Sn in the lithium iron phosphate base material is 7.5%-12.5%, and the molar percentage of elemental Ni in the lithium iron phosphate base material is 22.5%-27.5%.

In any embodiment, 0.075≤x≤0.125, and 0.225≤y≤0.275.

In any embodiment, the powder resistivity of the positive electrode active material under 8 MPa is ≤20 Ω·cm.

Controlling the contents of the elemental Sn and the elemental Ni and the powder resistivity within the above ranges can further improve both the energy density and the cycling performance of the battery.

In any embodiment, a molar percentage of elemental Ti in the lithium iron phosphate base material is 0.1%-0.5%, and a molar percentage of elemental V in the lithium iron phosphate base material is 0.1%-0.3%.

In any embodiment, the lithium iron phosphate base material has a molecular formula of LiₐFe_{b}P_{c}O_{d}SnₓNi_{y}Ti_{z}Vₙ, where 0.99≤a≤1, 0.545≤b≤0.9, 0.99≤c≤1, 3.9≤d≤4, 0.05≤x≤0.15, 0.20≤y≤0.30, 0.001≤z≤0.005, and 0.001≤n≤0.003.

In any embodiment, the molar percentage of elemental Ti in the lithium iron phosphate base material is 0.2%-0.4%, and the molar percentage of elemental V in the lithium iron phosphate base material is 0.15%-0.25%.

In any embodiment, 0.002≤z≤0.004, and 0.0015≤n≤0.0025.

After introducing the elemental Sn and the elemental Ni into the lithium iron phosphate base material, further introducing at least one of elementals V and Ti can further improve the gram capacity of the positive electrode active material, thereby making the prepared battery have better energy density.

In any embodiment, the positive electrode active material further includes elemental carbon, and calculated based on a total weight of the positive electrode active material, a carbon content of the positive electrode active material is 1.28%-1.35%. In any embodiment, calculated based on the total weight of the positive electrode active material, the carbon content of the positive electrode active material is 1.30%-1.34%. In any embodiment, calculated based on the total weight of the positive electrode active material, the carbon content of the positive electrode active material is 1.31%-1.33%.

In any embodiment, the positive electrode active material includes a carbon coating layer located on at least a part of a surface of the lithium iron phosphate base material.

At least a part of the surface of the lithium iron phosphate base material has a complete, thin, and dense carbon coating layer, which constructs a complete conductive network in the positive electrode active material, and thus makes a good contribution to the energy density, cycling performance, and the like of the battery.

In any embodiment, a ratio of an iron characteristic peak intensity I_{Fe} to a carbon characteristic peak intensity I_{c} of the positive electrode active material satisfies I_{Fe}/I_{c}≤0.023, and a ratio of a lithium characteristic peak intensity I_{Li} to the carbon characteristic peak intensity I_{c} of the positive electrode active material satisfies I_{Li}/I_{c}≤0.013, where a peak position of the iron characteristic peak intensity I_{Fe} is at 706.7±0.5 eV, a peak position of the lithium characteristic peak intensity I_{Li} is at 54.9±0.5 eV, and a peak position of the carbon characteristic peak intensity I_{c} is at 285.0±0.5 eV.

In any embodiment, a ratio of an iron characteristic peak intensity I_{Fe} to a carbon characteristic peak intensity I_{c} of the positive electrode active material satisfies I_{Fe}/I_{c}≤0.015, and a ratio of a lithium characteristic peak intensity I_{Li} to the carbon characteristic peak intensity I_{c} of the positive electrode active material satisfies I_{Li}/I_{c}≤0.010, where a peak position of the iron characteristic peak intensity I_{Fe} is at 706.7±0.5 eV, a peak position of the lithium characteristic peak intensity I_{Li} is at 54.9±0.5 eV, and a peak position of the carbon characteristic peak intensity I_{c} is at 285.0±0.5 eV.

When the ratios of the iron characteristic peak intensity and the lithium characteristic peak intensity to the carbon characteristic peak intensity of the positive electrode active material are within the above ranges, the carbon coating layer on the surface of the lithium iron phosphate base material has a better completeness, which can make the battery have better cycling performance.

In any embodiment, an iron dissolution rate of the positive electrode active material is ≤5.5 mg/L, where the iron dissolution rate is an iron ion concentration after the positive electrode active material is left standing in 0.008 mol/L hydrochloric acid at 25°C for 2 h.

In any embodiment, an iron dissolution rate of the positive electrode active material is ≤4 mg/L, where the iron dissolution rate is an iron ion concentration after the positive electrode active material is left standing in 0.008 mol/L hydrochloric acid at 25°C for 2 h.

When the iron dissolution rate of the positive electrode active material is within the above range, the carbon coating layer on the surface of the lithium iron phosphate base material has a better completeness, which can slow down the damage by acid to the lithium iron phosphate base material, making the battery have better cycling performance and storage life.

In any embodiment, a value range of a true BET of the positive electrode active material is 8.9-15.312 m²/g, and a value range of an apparent BET of the positive electrode active material is 9.428-16.994 m²/g.

In any embodiment, a value range of a true BET of the positive electrode active material is 10-14 m²/g, and a value range of an apparent BET of the positive electrode active material is 11-15 m²/g.

The lithium iron phosphate base material having the above characteristics has a dense carbon coating layer and a lower overall BET, which can make the battery have better energy density and cycling performance.

In any embodiment, a degree of graphitization of the positive electrode active material is ≤1.039.

In any embodiment, a degree of graphitization of the positive electrode active material is ≤1.01.

For the positive electrode active material having the above characteristics, the carbon coating layer on the surface of the lithium iron phosphate base material has a higher degree of graphitization, which can make the battery have better energy density and cycling performance.

In any embodiment, a volume average particle size D50 of the positive electrode active material is 0.7-1.52 µm. In any embodiment, the volume average particle size D50 of the positive electrode active material is 0.9-1.5 µm. In any embodiment, the volume average particle size D50 of the positive electrode active material is 1.1-1.3 µm.

In any embodiment, a powder compacted density of the positive electrode active material under 22.6 MPa is 2.21-2.73 g/cm³. In any embodiment, the powder compacted density of the positive electrode active material under 22.6 MPa is 2.45-2.65 g/cm³. In any embodiment, the powder compacted density of the positive electrode active material under 22.6 MPa is 2.5-2.6 g/cm³.

When the D50 and the powder compacted density of the positive electrode active material are within the above ranges, the prepared battery can have better energy density and cycling performance.

A second aspect of the present application provides a positive electrode plate, characterized by including a positive electrode current collector and a positive electrode active material provided on at least one surface of the positive electrode current collector, where the positive electrode active material is the positive electrode active material according to the first aspect of the present application or a positive electrode active material prepared by the method according to the second aspect of the present application.

In any embodiment, a dehydration efficiency of the positive electrode plate is 6.6-9.8 ppm/min, and in any embodiment, the dehydration efficiency of the positive electrode plate is 8-9 ppm/min.

In any embodiment, a compacted density of the positive electrode plate is not lower than 2.23 g/cm³.

Since the lithium iron phosphate base material has a certain proportion of elemental Sn and elemental Ni introduced therein, the carbon coating layer on its surface is made more complete and denser. Therefore, the prepared positive electrode plate has characteristics of high compacted density and easy dehydration, which can make the lithium-ion battery concurrently have excellent energy density, cycling performance, and processing performance, and significantly improve the production efficiency of the battery and reduce the production cost of the battery.

A third aspect of the present application provides a lithium secondary battery, characterized by including the positive electrode plate according to the third aspect of the present application.

A fourth aspect of the present application provides an electrical device, characterized by including the lithium secondary battery according to the fourth aspect of the present application.

### BRIEF DESCRIPTION OF DRAWINGS

FIG. 1 is a schematic diagram of a secondary battery according to an embodiment of the present application.
FIG. 2 is an exploded view of the secondary battery according to an embodiment of the present application shown in FIG. 1.
FIG. 3 is a schematic diagram of an electrical device using a secondary battery as a power source according to an embodiment of the present application.
FIG. 4 is a spectrum of a Raman spectrometer used to characterize a degree of graphitization in an example of the present application, where corresponding peak intensities are denoted as D2, D1, D3, and G, respectively, and then the degree of graphitization is D1/G.

### Description of reference signs:

5 secondary battery; 51 housing; 52 electrode assembly; and 53 cover plate.

### DESCRIPTION OF EMBODIMENTS

Hereinafter, embodiments of a lithium iron phosphate positive electrode active material, a positive electrode plate containing the positive electrode active material, a secondary battery, an electrical device, and a manufacturing method thereof of the present application are described in detail. However, unnecessary detailed descriptions may be omitted. For example, detailed descriptions of well-known matters and repetitive descriptions of practically identical structures may be omitted. This is to avoid the following description from becoming unnecessarily redundant and to facilitate understanding by those skilled in the art. In addition, the drawings and the following description are provided for those skilled in the art to fully understand the present application, and are not intended to limit the subject matter described in the claims.

The "range" disclosed in the present application is defined in the form of a lower limit and an upper limit, and a given range is defined by selecting a lower limit and an upper limit, and the selected lower limit and upper limit define a boundary of a particular range. A range defined in this manner may be inclusive or exclusive of endpoints, and may be arbitrarily combined, that is, any lower limit may be combined with any upper limit to form a range. For example, if ranges of 60-120 and 80-110 are listed for a specific parameter, it is understood that ranges of 60-110 and 80-120 are also contemplated. In addition, if minimum range values 1 and 2 are listed, and if maximum range values 3, 4, and 5 are listed, the following ranges can all be contemplated: 1-3, 1-4, 1-5, 2-3, 2-4, and 2-5. In the present application, unless otherwise specified, a value range "a-b" represents an abbreviated representation of any combination of real numbers between a and b, where both a and b are real numbers. For example, a value range "0-5" represents that all real numbers between "0-5" have been fully listed herein, and "0-5" is only an abbreviated representation of these numerical combinations. In addition, when a parameter is expressed as an integer of ≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and optionally, sequentially. For example, the method includes steps (a) and (b), which represents that the method may include steps (a) and (b) performed sequentially, or may include steps (b) and (a) performed sequentially. For example, reference to the method further including step (c) represents that step (c) may be added to the method in any order, for example, the method may include steps (a), (b), and (c), may include steps (a), (c), and (b), may include steps (c), (a), and (b), or the like.

Unless otherwise specified, "include" and "comprise" mentioned in the present application represent an open type, and may also be a closed type. For example, the "include" and "comprise" may represent that other components not listed may also be included or comprised, or only the listed components may be included or comprised.

Unless otherwise specified, in the present application, the term "or" is inclusive. For example, the phrase "A or B" represents "A, B, or both A and B". More specifically, any of the following conditions satisfies the condition "A or B": A is true (or exists) and B is false (or does not exist); A is false (or does not exist) and B is true (or exists); or both A and B are true (or exist).

Since the gram capacity of lithium iron phosphate is lower than that of ternary materials, in recent years, improving the capacity utilization of lithium iron phosphate has become a major research focus in recent years. However, focusing only on improving the capacity performance of lithium iron phosphate inevitably sacrifices other performance of batteries, such as cycling performance, processing performance, and the like. The lithium iron phosphate positive electrode active material provided in the present application has characteristics of high gram capacity, and a battery prepared therefrom can have good energy density, cycling performance, and processing performance.

### [Positive electrode active material]

In order to achieve the above objective, the present application provides a lithium iron phosphate positive electrode active material. The positive electrode active material includes a lithium iron phosphate base material. A molar percentage of elemental Sn in the lithium iron phosphate base material is 5%-15%, and a molar percentage of elemental Ni in the lithium iron phosphate base material is 20%-30%. A powder resistivity of the positive electrode active material under 8 MPa is ≤30 Ω·cm.

In some embodiments, the lithium iron phosphate base material contains elemental Sn. In some embodiments, the molar percentage of elemental Sn in the lithium iron phosphate base material is 5%-15%, such as 5%, 6%, 7%, 8%, 9%, 10%, 11%, 12%, 13%, 14%, 15%, or the like, or other values not listed within the range of 5%-15%. In some non-limiting embodiments, the molar percentage of elemental Sn in the lithium iron phosphate base material is 5%, 7.5%, 10%, 12.5%, or 15%.

In some embodiments, the lithium iron phosphate base material contains elemental Ni. In some embodiments, the molar percentage of elemental Ni in the lithium iron phosphate base material is 20%-30%, such as 20%, 21%, 22%, 23%, 24%, 25%, 26%, 27%, 28%, 29%, 30%, or the like, or other values not listed within the range of 20%-30%. In some non-limiting embodiments, the molar percentage of elemental Ni in the lithium iron phosphate base material is 20%, 22.5%, 25%, 27.5%, or 30%.

In some embodiments, the powder resistivity of the positive electrode active material under 8 MPa is ≤30 ohm·centimeter (Ω·cm), such as 1 Ω·cm, 5 Ω·cm, 10 Ω·cm, 15 Ω·cm, 20 Ω·cm, 25 Ω·cm, 30 Ω·cm, or the like, or other values not listed within the range of ≤30 Ω·cm. In some non-limiting embodiments, the powder resistivity of the positive electrode active material under 8 MPa is 16.8 Ω·cm, 24.7 Ω·cm, 18.8 Ω·cm, 11.4 Ω·cm, 9.6 Ω·cm, 8.5 Ω·cm, 13.5 Ω·cm, 23.7 Ω·cm, 27.8 Ω·cm, 15.3 Ω·cm, 16.2 Ω·cm, 20.3 Ω·cm, 28.9 Ω·cm, 13.4 Ω·cm, 15.3 Ω·cm, 17.9 Ω·cm, 19.5 Ω·cm, 19.8 Ω·cm, 11.2 Ω·cm, 16.5 Ω·cm, or 9.8 Ω·cm.

As used herein, "powder resistivity" is a parameter describing the conductive performance of a powder material, and generally refers to a resistance per unit length and unit area, which is measured in ohm·meter (Ω·m). Its measurement method is based on the standard GB/T 30835-2014, and is tested using a powder resistivity tester (ST2722).

Introducing the elemental Sn and the elemental Ni in the above content ranges into the lithium iron phosphate base material can significantly improve the gram capacity of the positive electrode active material. Meanwhile, the surface of the lithium iron phosphate base material is also coated with a complete and dense carbon coating layer, and the positive electrode active material has a low powder resistivity. Therefore, a battery prepared using the positive electrode active material in the present application can have both better energy density and cycling performance.

In some embodiments, the lithium iron phosphate base material further contains one, two, or more of elementals V, Ti, Cu, Cr, Zn, Pb, Ca, Co, Sr, and Nb.

In some embodiments, the molar percentage of elementals V, Ti, Cu, Cr, Zn, Pb, Ca, Co, Sr, and Nb in the lithium iron phosphate base material is 0%-0.8%, such as 0.01%, 0.1%, 0.2%, 0.3%, 0.4%, 0.5%, 0.6%, 0.7%, 0.8%, or the like, or other values not listed within the range of 0%-0.8%.

In some embodiments, the lithium iron phosphate base material has a molecular formula of LiₐFe_{b}P_{c}O_{d}SnₓNi_{y}Q_{q}, where Q includes at least one of V, Ti, Cu, Cr, Zn, Pb, Ca, Co, Sr, and Nb, 0.99≤a≤1, 0.545≤b≤0.9, 0.99≤c≤1, 3.9≤d≤4, 0.05≤x≤0.15, 0.20≤y≤0.30, and 0≤q≤0.008.

As used herein, "having a molecular formula" is not limited to the substance represented by the molecular formula, but also includes other substances formed after performing further doping modification and/or coating modification on the basis of the molecular formula, which is not limited herein. The use of "having a molecular formula" is only for convenience of description and is not intended to limit the present application. It can be understood that new materials or new substances obtained by appropriately modifying the listed positive electrode active substances are also within the scope of positive electrode active substances, and the aforementioned appropriate modification refers to acceptable modification methods for positive electrode active substances, non-limiting examples of which include coating modification.

In the list of positive electrode active substances in the present application, unless otherwise specified, the content of Li is an initial state of the material. When the positive electrode active substance is applied to a positive electrode plate in a battery system, after charge-discharge cycles, the content of Li in the positive electrode active substance contained in the positive electrode plate generally changes. The content of Li can be measured by atomic molar content, but is not limited thereto. Regarding "the content of Li is an initial state of the material", the initial state of the material refers to a state before feeding into a positive electrode slurry.

In the list of positive electrode active substances in the present application, the content of oxygen (O) is only a theoretical state value, lattice oxygen release leads to changes in the atomic molar content of oxygen, and the actual content of O floats. The content of O can be measured by atomic molar content, but is not limited thereto.

In some embodiments, a value range of x in the molecular formula LiₐFe_{b}P_{c}O_{d}SnₓNi_{y}Q_{q} is 0.05≤x≤0.15, such as 0.05, 0.06, 0.07, 0.08, 0.09, 0.10, 0.11, 0.12, 0.13, 0.14, 0.15, or the like, or other values not listed within the range of 0.05≤x≤0.15. In some non-limiting embodiments, the value range of x in the molecular formula LiₐFe_{b}P_{c}O_{d}SnₓNi_{y}Q_{q} is 0.05, 0.075, 0.10, 0.125, or 0.15.

In some embodiments, a value range of y in the molecular formula LiₐFe_{b}P_{c}O_{d}SnₓNi_{y}Q_{q} is 0.20≤y≤0.30, such as 0.20, 0.21, 0.22, 0.23, 0.24, 0.25, 0.26, 0.27, 0.28, 0.29, 0.30, or the like, or other values not listed within the range of 0.20≤y≤0.30. In some non-limiting embodiments, the value range of y in the molecular formula LiₐFe_{b}P_{c}O_{d}SnₓNi_{y}Q_{q} is 0.2, 0.225, 0.25, 0.275, or 0.30.

After introducing the elemental Sn and the elemental Ni into the lithium iron phosphate base material, further introducing at least one of elementals such as V, Ti, Cu, Cr, Zn, Pb, Ca, Co, Sr, and Nb can further improve the gram capacity of the positive electrode active material, thereby making the prepared battery have better energy density.

In some embodiments, the molar percentage of elemental Sn in the lithium iron phosphate base material is 7.5%-12.5%, and the molar percentage of elemental Ni in the lithium iron phosphate base material is 22.5%-27.5%.

Correspondingly, in the molecular formula LiₐFe_{b}P_{c}O_{d}SnₓNi_{y}Q_{q}, 0.075≤x≤0.125, and 0.225≤y≤0.275.

Introducing the elemental Sn and the elemental Ni in the above ranges, especially the elemental Sn and the elemental Ni within the above preferred ranges, into the lithium iron phosphate base material can significantly improve the gram capacity of the positive electrode active material, thereby making the prepared battery have better energy density.

In some embodiments, the lithium iron phosphate base material further contains elemental Ti and elemental V.

In some embodiments, the lithium iron phosphate base material has a molecular formula of LiₐFe_{b}P_{c}O_{d}SnₓNi_{y}Ti_{z}Vₙ, where 0.99≤a≤1, 0.545≤b≤0.9, 0.99≤c≤1, 3.9≤d≤4, 0.05≤x≤0.15, 0.20≤y≤0.30, 0.001≤z≤0.005, and 0.001≤n≤0.003.

In some embodiments, the molar percentage of elemental Ti in the lithium iron phosphate base material is 0.1%-0.5%, such as 0.1%, 0.15%, 0.2%, 0.25%, 0.3%, 0.35%, 0.4%, 0.45%, 0.5%, or the like, or other values not listed within the range of 0.1%-0.5%. In some non-limiting embodiments, the molar percentage of elemental Ti in the lithium iron phosphate base material is 0.1%, 0.2%, 0.3%, 0.4%, or 0.5%.

Correspondingly, a value range of z in the molecular formula LiₐFe_{b}P_{c}O_{d}SnₓNi_{y}Ti_{z}Vₙ is 0.001≤z≤0.005, such as 0.001, 0.0015, 0.002, 0.0025, 0.003, 0.0035, 0.004, 0.0045, 0.005, or the like, or other values not listed within the range of 0.001≤z≤0.005. In some non-limiting embodiments, the value range of z in the molecular formula LiₐFe_{b}P_{c}O_{d}SnₓNi_{y}Ti_{z}Vₙ is 0.001, 0.002, 0.003, 0.004, or 0.005.

In some embodiments, the molar percentage of elemental V in the lithium iron phosphate base material is 0.1%-0.3%, such as 0.1%, 0.15%, 0.2%, 0.25%, 0.3%, or the like, or other values not listed within the range of 0.1%-0.3%. In some non-limiting embodiments, the molar percentage of elemental V in the lithium iron phosphate base material is 0.1%, 0.15%, 0.2%, 0.25%, or 0.3%.

Correspondingly, a value range of n in the molecular formula LiₐFe_{b}P_{c}O_{d}SnₓNi_{y}Ti_{z}Vₙ is 0.001≤n≤0.003, such as 0.001, 0.0015, 0.002, 0.0025, 0.003, or the like, or other values not listed within the range of 0.001≤n≤0.003. In some non-limiting embodiments, the value range of n in the molecular formula LiₐFe_{b}P_{c}O_{d}SnₓNi_{y}Ti_{z}Vₙ is 0.001, 0.0015, 0.002, 0.0025, or 0.003.

In some embodiments, the molar percentage of elemental Ti in the lithium iron phosphate base material is 0.2%-0.4%, and the molar percentage of elemental V in the lithium iron phosphate base material is 0.15%-0.25%.

Correspondingly, in the molecular formula LiₐFe_{b}P_{c}O_{d}SnₓNi_{y}Ti_{z}Vₙ, 0.002≤z≤0.004, and 0.0015≤n≤0.0025.

After introducing the elemental Sn and the elemental Ni into the lithium iron phosphate base material, further introducing at least one of elementals V and Ti can further improve the gram capacity of the positive electrode active material, thereby making the prepared battery have better energy density.

In some embodiments, the positive electrode active material further includes elemental carbon, and calculated based on the total weight of the positive electrode active material, the carbon content of the positive electrode active material is 1.28%-1.35%, such as 1.28%, 1.29%, 1.30%, 1.31%, 1.32%, 1.33%, 1.34%, 1.35%, or the like, or other values not listed within the range of 1.28%-1.35%.

In some embodiments, calculated based on the total weight of the positive electrode active material, the carbon content of the positive electrode active material is 1.30%-1.34%.

In some embodiments, calculated based on the total weight of the positive electrode active material, the carbon content of the positive electrode active material is 1.31%-1.33%.

As used herein, the measurement method of "carbon content" is based on the standard GB/T 20123-2006/ISO 15350:2000, and is measured using a carbon-sulfur analyzer.

In some embodiments, the positive electrode active material includes a carbon coating layer located on at least a part of a surface of the lithium iron phosphate base material.

As used herein, "carbon coating layer" refers to a part applied on the lithium iron phosphate base material, and the part can but does not necessarily completely coat the lithium iron phosphate base material. The use of "carbon coating layer" is only for convenience of description and is not intended to limit the present application.

The surface of the lithium iron phosphate base material has a complete, thin, and dense carbon coating layer, which constructs a complete conductive network in the positive electrode active material, and thus makes a good contribution to the energy density, cycling performance, and the like of the battery.

In some embodiments, the powder resistivity of the positive electrode active material under 8 MPa is ≤30 ohm·centimeter (Ω·cm).

In some embodiments, the powder resistivity of the positive electrode active material under 8 megapascals (MPa) is ≤28.9 Ω·cm.

In some embodiments, the powder resistivity of the positive electrode active material under 8 MPa is ≤20 Ω·cm.

Powder resistivity, particle size distribution, and bulk density are all related to the conductivity of the carbon coating layer. Under conditions of similar particle size distribution and bulk density, the powder resistivity can characterize the conductive effect of the carbon coating layer and also reflect the degree of graphitization of the carbon coating layer.

For the positive electrode active material having the above characteristics, the carbon coating layer on the surface of the lithium iron phosphate base material makes the positive electrode active material have a better powder resistivity, which can make the battery have better energy density and cycling performance.

In some embodiments, a ratio of an iron characteristic peak intensity I_{Fe} to a carbon characteristic peak intensity I_{c} of the positive electrode active material satisfies I_{Fe}/I_{c}≤0.023, such as 0.001, 0.002, 0.003, 0.004, 0.005, 0.006, 0.007, 0.008, 0.009, 0.010, 0.011, 0.012, 0.013, 0.014, 0.015, 0.016, 0.017, 0.018, 0.019, 0.020, 0.021, 0.022, 0.023, or the like, or other values not listed within the range of ≤0.023. In some embodiments, a ratio of a lithium characteristic peak intensity I_{Li} to the carbon characteristic peak intensity I_{c} of the positive electrode active material satisfies I_{Li}/I_{c}≤0.013, such as 0.001, 0.002, 0.003, 0.004, 0.005, 0.006, 0.007, 0.008, 0.009, 0.010, 0.011, 0.012, 0.013, or the like, or other values not listed within the range of ≤0.013. A peak position of the iron characteristic peak intensity I_{Fe} is at 706.7±0.5 eV, a peak position of the lithium characteristic peak intensity I_{Li} is at 54.9±0.5 eV, and a peak position of the carbon characteristic peak intensity I_{c} is at 285.0±0.5 eV.

In some embodiments, a ratio of an iron characteristic peak intensity I_{Fe} to a carbon characteristic peak intensity I_{c} of the positive electrode active material satisfies I_{Fe}/I_{c}≤0.015, and a ratio of a lithium characteristic peak intensity I_{Li} to the carbon characteristic peak intensity I_{c} of the positive electrode active material satisfies I_{Li}/I_{c}≤0.010. An X-ray photoelectron spectrometer can measure characteristic peak intensities based on measured electron binding energies to determine chemical compositions of samples. Due to the barrier effect of the carbon coating layer, the characteristic peak intensity of the coated lithium iron phosphate base material is low. Therefore, the completeness of the carbon coating layer on the surface of the lithium iron phosphate particles can be characterized by calculating the ratios of the iron characteristic peak intensity (706.7±0.5 eV) and the lithium characteristic peak intensity (54.9±0.5 eV) to the carbon characteristic peak intensity (285.0±0.5 eV).

When the ratios of the iron characteristic peak intensity and the lithium characteristic peak intensity to the carbon characteristic peak intensity of the positive electrode active material are within the above ranges, the carbon coating layer on the surface of the lithium iron phosphate base material has a better completeness, which can make the battery have better cycling performance.

In some embodiments, the iron dissolution rate of the positive electrode active material is ≤5.5 milligram/liter (mg/L), such as 0.1 mg/L, 0.5 mg/L, 1.0 mg/L, 1.5 mg/L, 2.0 mg/L, 2.5 mg/L, 3.0 mg/L, 3.5 mg/L, 4.0 mg/L, 4.5 mg/L, 5.0 mg/L, 5.5 mg/L, or the like, or other values not listed within the range of ≤5.5 mg/L. The iron dissolution rate is an iron ion concentration after the positive electrode active material is left standing in 0.008 mole/liter (mol/L) hydrochloric acid at 25°C for 2 h.

In some embodiments, the iron dissolution rate of the positive electrode active material is ≤5 mg/L.

In some embodiments, the iron dissolution rate of the positive electrode active material is ≤4 mg/L.

The lithium iron phosphate base material is soluble in dilute hydrochloric acid. Due to the barrier effect of the carbon coating layer, the contact between the coated lithium iron phosphate base material and the dilute hydrochloric acid is slower, that is, the dissolution rate is lower. Therefore, under the same test conditions (hydrochloric acid concentration of 0.008 mol/L, temperature of 25 °C, standing time of 2 h), the concentration of Fe ions dissolved in hydrochloric acid can characterize the completeness of the carbon coating layer on the surface of the lithium iron phosphate base material.

When the iron dissolution rate of the positive electrode active material is within the above range, the carbon coating layer on the surface of the lithium iron phosphate base material has a better completeness, which can slow down the damage by acid to the lithium iron phosphate base material, making the battery have better cycling performance and storage life.

As used herein, "specific surface area" refers to a total area possessed by a material per unit mass. The apparent BET is a sum of specific surface areas of the lithium iron phosphate base material and the carbon coating layer, that is, a total specific surface area of the lithium iron phosphate positive electrode material. The true BET is a specific surface area of the lithium iron phosphate base material.

Since microporous and mesoporous structures exist in the carbon coating layer on the surface of the lithium iron phosphate base material, lithium iron phosphate base material particles having the same size have different BETs due to differences in the densities of the carbon coating layers on their surfaces.

In some embodiments, a value range of a true BET of the positive electrode active material is 8.9-15.312 m²/g, such as 8.9 m²/g, 9.0 m²/g, 10.0 m²/g, 11.0 m²/g, 12.0 m²/g, 13.0 m²/g, 14.0 m²/g, 15.0 m²/g, 15.312 m²/g, or the like, or other values not listed within the range of 8.9-15.312 m²/g. In some embodiments, the value range of the apparent BET of the positive electrode active material is 9.428-16.994 m²/g, such as 9.428 m²/g, 9.5 m²/g, 10.0 m²/g, 11.0 m²/g, 12.0 m²/g, 13.0 m²/g, 14.0 m²/g, 15.0 m²/g, 16.0 m²/g, 16.994 m²/g, or the like, or other values not listed within the range of 9.428-16.994 m²/g.

In some embodiments, a value range of a true BET of the positive electrode active material is 10-14 m²/g, and a value range of an apparent BET of the positive electrode active material is 11-15 m²/g.

The lithium iron phosphate base material having the above characteristics has a dense carbon coating layer and a lower overall BET, which can make the battery have better energy density and cycling performance.

In some embodiments, a degree of graphitization of the positive electrode active material is ≤1.039, such as 0.970, 0.980, 0.990, 1.000, 1.010, 1.020, 1.030, 1.039, or the like, or other values not listed within the range of ≤1.039.

In some embodiments, the degree of graphitization of the positive electrode active material is ≤1.01.

In some embodiments, the degree of graphitization of the positive electrode active material is ≤1.

As used herein, the "degree of graphitization" of the positive electrode active material refers to a degree of graphitization of a carbon component, which reflects a completeness of a graphite crystal structure in carbon-coated lithium iron phosphate of the present application, particularly in the carbon coating layer, that is, a regularity of carbon atom arrangement in the graphite structure. A spectral curve of the carbon layer on the surface of LFP can be measured using a Raman spectrometer, and after fitting and peak splitting, the degree of graphitization of the carbon layer can be characterized by a D₁/G peak intensity ratio.

In some embodiments, a volume average particle size D50 of the positive electrode active material is 0.7-1.52 µm, such as 0.7 µm, 0.75 µm, 0.8 µm, 0.85 µm, 0.9 µm, 0.95 µm, 1.0 µm, 1.05 µm, 1.10 µm, 1.15 µm, 1.20 µm, 1.25 µm, 1.30 µm, 1.35 µm, 1.40 µm, 1.45 µm, 1.50 µm, 1.52 µm, or the like, or other values not listed within the range of 0.7-1.52 µm.

In some embodiments, the volume average particle size D50 of the positive electrode active material is 0.9-1.5 µm.

In some embodiments, the volume average particle size D50 of the positive electrode active material is 1.1-1.3 µm.

As used herein, "volume average particle size D50" refers to a particle size corresponding to a cumulative volume distribution percentage reaching 50% calculated from a small particle size side in a particle size distribution of particles. It can be measured by referring to GB/T19077-2016/ISO 13320:2009, and measured using a Malvern 2000 (MasterSizer 2000) laser particle size analyzer.

In some embodiments, the powder compacted density of the positive electrode active material under 22.6 MPa is 2.21-2.73 g/cm³, such as 2.21 g/cm³, 2.25 g/cm³, 2.3 g/cm³, 2.35 g/cm³, 2.4 g/cm³, 2.45 g/cm³, 2.5 g/cm³, 2.55 g/cm³, 2.6 g/cm³, 2.65 g/cm³, 2.7 g/cm³, 2.73 g/cm³, or the like, or other values not listed within the range of 2.21-2.73 g/cm³.

In some embodiments, the powder compacted density of the positive electrode active material under 22.6 MPa is 2.45-2.65 g/cm³.

In some embodiments, the powder compacted density of the positive electrode active material under 22.6 MPa is 2.5-2.6 g/cm³.

As used herein, "compacted density" is defined as: compacted density = areal density/(thickness of electrode plate after rolling - thickness of current collector), and for its measurement method, reference can be made to GB/T24533-2009.

In some embodiments, a gram capacity of the positive electrode active material is 155-165 mAh/g.

In some embodiments, the gram capacity of the positive electrode active material is 157-163 mAh/g.

In some embodiments, the gram capacity of the positive electrode active material is 159-162 mAh/g.

As used herein, the "gram capacity" of the positive electrode active material refers to a ratio of an electrical capacity that can be released by the positive electrode active material to its mass.

When the D50, the powder compacted density, and the gram capacity of the positive electrode active material are within the above ranges, the prepared battery has better energy density and cycling performance.

### [Positive electrode plate]

The present application further provides a positive electrode plate, characterized by including a positive electrode current collector and a positive electrode active material provided on at least one surface of the positive electrode current collector. The positive electrode active material is the positive electrode active material of the present application or a positive electrode active material prepared by the method according to the second aspect of the present application.

In some embodiments, a dehydration efficiency of the positive electrode plate is 6.6-9.8 ppm/min, such as 6.6 ppm/min, 7 ppm/min, 7.5 ppm/min, 8 ppm/min, 8.5 ppm/min, 9 ppm/min, 9.5 ppm/min, 9.8 ppm/min, or the like, or other values not listed within the range of 6.6-9.8 ppm/min.

In some embodiments, the dehydration efficiency of the positive electrode plate is 8-9 ppm/min.

In some embodiments, the compacted density of the positive electrode plate is not lower than 2.23 g/cm³, such as 2.23 g/cm³, 2.25 g/cm³, 2.3 g/cm³, 2.35 g/cm³, 2.4 g/cm³, 2.45 g/cm³, 2.5 g/cm³, 2.55 g/cm³, 2.6 g/cm³, 2.65 g/cm³, 2.7 g/cm³, 2.72 g/cm³, 2.8 g/cm³, 2.9 g/cm³, 3.0 g/cm³, or the like, or other values not listed within the range of not lower than 2.23 g/cm³.

Too high a content of water in an electrode plate, on one hand, leads to problems such as easy fall-off of a positive electrode film layer in the electrode plate and unstable structural and chemical properties, which ultimately affects cycling performance of the battery; and on the other hand, increases a risk of unqualified products during a battery preparation process, which not only increases costs but also seriously affects battery production efficiency.

Since the lithium iron phosphate base material has a certain proportion of elemental Sn and elemental Ni introduced therein, the carbon coating layer on its surface is made more complete and denser. Therefore, the prepared positive electrode plate has characteristics of high compacted density and easy dehydration, which can make the lithium-ion battery concurrently have excellent energy density, cycling performance, and processing performance, and significantly improve the production efficiency of the battery and reduce the production cost of the battery.

In some embodiments, the positive electrode current collector may use a metal foil or a composite current collector. For example, in a case of metal foil, an aluminum foil may be used. The composite current collector may include a polymer matrix layer and a metal layer formed on at least one surface of the polymer matrix layer. The composite current collector may be formed by forming a metal material (aluminum, aluminum alloy, nickel, nickel alloy, titanium, titanium alloy, silver, silver alloy, or the like) on a polymer matrix (such as a matrix of polypropylene (PP), polyethylene terephthalate (PET), polybutylene terephthalate (PBT), polystyrene (PS), polyethylene (PE), or the like).

In some embodiments, the positive electrode plate may further include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode plate may further include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared in the following manner: dispersing the above components for preparing the positive electrode plate, such as the positive electrode active material, the conductive agent, the binder, and any other components, in a solvent (such as N-methylpyrrolidone) to form a positive electrode slurry; and applying the positive electrode slurry on the positive electrode current collector, followed by processes such as drying and cold pressing, to obtain the positive electrode plate.

### [Negative electrode plate]

The negative electrode plate includes a negative electrode current collector and a negative electrode film layer provided on at least one surface of the negative electrode current collector, and the negative electrode film layer includes a negative electrode active material.

As an example, the negative electrode current collector has two surfaces opposite to each other in its own thickness direction, and the negative electrode film layer is provided on either or both of the two opposite surfaces of the negative electrode current collector.

In some embodiments, a compacted density of the negative electrode plate is not lower than 1.4 g/cm³.

In some embodiments, the negative electrode current collector may use a metal foil or a composite current collector. For example, in a case of metal foil, a copper foil may be used. The composite current collector may include a polymer matrix layer and a metal layer formed on at least one surface of the polymer matrix. The composite current collector may be formed by forming a metal material (copper, copper alloy, nickel, nickel alloy, titanium, titanium alloy, silver, silver alloy, or the like) on a polymer matrix (such as a matrix of polypropylene (PP), polyethylene terephthalate (PET), polybutylene terephthalate (PBT), polystyrene (PS), polyethylene (PE), or the like).

In some embodiments, the negative electrode active material may use a negative electrode active material for batteries well known in the art. As an example, the negative electrode active material may include at least one of the following materials: artificial graphite, natural graphite, soft carbon, hard carbon, silicon-based materials, tin-based materials, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, the present application is not limited to these materials, and other conventional materials that can be used as negative electrode active materials for batteries may also be used. These negative electrode active materials may be used alone, or two or more of them may be used in combination.

In some embodiments, the negative electrode film layer optionally further includes a binder. The binder optionally may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer optionally further includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer optionally further includes other additives, such as a thickener (such as sodium carboxymethyl cellulose (CMC-Na)) or the like.

In some embodiments, the negative electrode plate can be prepared in the following manner: dispersing the above components for preparing the negative electrode plate, such as the negative electrode active material, the conductive agent, the binder, and any other components, in a solvent (such as deionized water) to form a negative electrode slurry; and applying the negative electrode slurry on the negative electrode current collector, followed by processes such as drying and cold pressing, to obtain the negative electrode plate.

### [Electrolyte]

The electrolyte plays a role of conducting ions between the positive electrode plate and the negative electrode plate. The present application has no specific limitation on the type of the electrolyte, which can be selected according to requirements.

In some embodiments, the electrolyte uses a liquid electrolyte. The liquid electrolyte includes an electrolytic salt and a solvent.

In some embodiments, the electrolytic salt can be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent can be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methylethyl sulfone, and diethyl sulfone.

In some embodiments, the liquid electrolyte optionally further includes an additive. For example, the additive may include a negative electrode film-forming additive, a positive electrode film-forming additive, and may further include an additive capable of improving certain performance of the battery, such as an additive for improving overcharge performance of the battery, an additive for improving high-temperature or low-temperature performance of the battery, and the like.

### [Separator]

In some embodiments, a separator is further included in the secondary battery. The present application has no particular limitation on the type of the separator, and any well-known porous structure separator having good chemical stability and mechanical stability can be selected.

In some embodiments, a material of the separator optionally may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, materials of all layers may be the same or different, which is not particularly limited.

In some embodiments, the positive electrode plate, the negative electrode plate, and the separator can be made into an electrode assembly through a winding process or a lamination process.

In some embodiments, the secondary battery may include an outer package. The outer package can be used to package the electrode assembly and the electrolyte.

In some embodiments, the outer package of the secondary battery may be a hard shell, such as a hard plastic shell, an aluminum shell, a steel shell, or the like. The outer package of the secondary battery may alternatively be a pouch, such as a bag-type pouch. A material of the pouch may be plastic, and in a case of plastic, polypropylene, polybutylene terephthalate, polybutylene succinate, and the like can be listed.

### [Lithium secondary battery]

The present application further provides a lithium secondary battery, including the positive electrode plate of the present application.

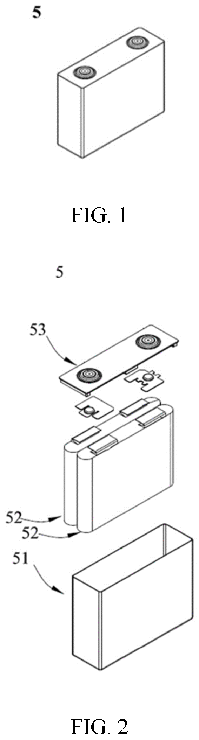

The present application has no particular limitation on the shape of the lithium secondary battery, which may be cylindrical, prismatic, or any other shape. For example, FIG. 1 is a prismatic secondary battery 5 as an example.

In some embodiments, referring to FIG. 2, the outer package may include a housing 51 and a cover plate 53. The housing 51 may include a bottom plate and side plates connected to the bottom plate, and the bottom plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator can form an electrode assembly 52 through a winding process or a lamination process. The electrode assembly 52 is packaged in the accommodating cavity. The electrolyte infiltrates the electrode assembly 52. The number of electrode assemblies 52 contained in the secondary battery 5 may be one or more, which can be selected by those skilled in the art according to specific actual requirements.

### [Electrical device]

In addition, the present application further provides an electrical device, and the electrical device includes the lithium secondary battery provided in the present application. The lithium secondary battery can be used as a power source of the electrical device, and can alternatively be used as an energy storage unit of the electrical device. The electrical device may include a mobile device (such as a mobile phone, a laptop computer, and the like), an electric vehicle (such as a battery electric vehicle, a hybrid electric vehicle, a plug-in hybrid electric vehicle, an electric bicycle, an electric scooter, an electric golf cart, an electric truck, and the like), an electric train, a ship and a satellite, an energy storage system, and the like, but is not limited thereto.

As the electrical device, the lithium secondary battery can be selected according to its use requirements.

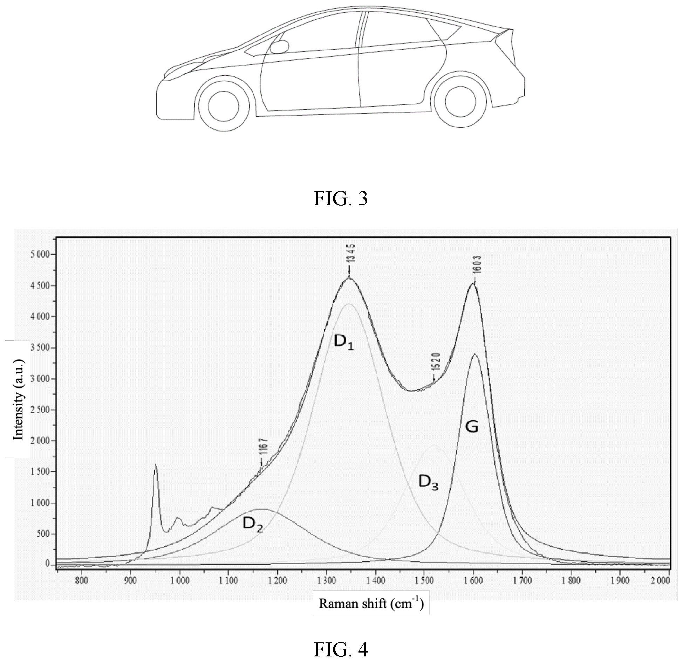

FIG. 3 is an electrical device as an example. The electrical device is a battery electric vehicle, a hybrid electric vehicle, a plug-in hybrid electric vehicle, or the like. In order to meet requirements of the electrical device for high power and high energy density of the lithium secondary battery, a battery pack or a battery module can be used.

As another example, the device may be a mobile phone, a tablet computer, a laptop computer, or the like. The device generally requires thinning and light weight, and a lithium secondary battery can be used as a power source.

### Examples

Hereinafter, examples of the present application are described. The examples described below are exemplary, only used to explain the present application, and cannot be understood as limitations on the present application. Where specific techniques or conditions are not specified in the examples, they are performed according to techniques or conditions described in literature in the art or according to product specifications. Reagents or instruments used without specifying manufacturers are all conventional products that can be obtained through commercial purchase.

### I. Preparation methods

### Example 1

### 1. Preparation of lithium iron phosphate positive electrode active material

(1) Preparation of core material: Iron phosphate, lithium carbonate, tin oxide, nickel oxide, titanium oxide, vanadium oxide, a carbon source, and a carbon coating additive were used as raw materials, and feeding was performed according to molar ratios in a finished product molecular formula of LiFe_{0.645}Ni_{0.25}Sn_{0.1}Ti_{0.003}V_{0.002}PO₄. The carbon source was a mixture of glucose, sucrose, and a highly graphitized carbon source, where the highly graphitized carbon source referred to a class of polymer carbon sources having a molecular weight of 2000 or more and containing at least one characteristic functional group of a benzene ring and a carboxyl group, and easily decomposes to form a graphite-like structure during a high-temperature sintering process. The coating additive referred to materials capable of catalyzing carbon layer graphitization, such as ferrocene, iron nitrate, and iron oxide.

The raw materials were sequentially added to solvent water for wet grinding to obtain a mixed slurry. The obtained slurry was spray-dried, and then the dried product was placed in a roller hearth furnace and sintered at 500°C for 28 h with air isolated, and naturally cooled to a material temperature <80°C and discharged to obtain a calcined material. The calcined material was pulverized, sieved, and demagnetized to obtain a core material. The carbon content of the prepared core material was 0.3%-0.35%, and the Dv50 was 0.5-0.55 µm.

(2) Carbon coating: The above core material was placed in a roller hearth furnace and sintered under a nitrogen atmosphere, and an acetone solution was sprayed in the sintering furnace, where constant-temperature sintering was performed at 770°C for 10 h, with a total sintering time of 24 h. The material was naturally cooled to a temperature <80°C and discharged. After further pulverization using a jet mill, a lithium iron phosphate positive electrode active substance was obtained.

### 2. Preparation of positive electrode plate

The above positive electrode active material lithium iron phosphate, a binder polyvinylidene fluoride (PVDF), and a conductive agent acetylene black were mixed according to a mass ratio of 96.5:2.0:1.5, and then N-methylpyrrolidone (NMP) solvent was added to form a uniform positive electrode slurry. This slurry was applied on a carbon-coated aluminum foil having a thickness of 13 µm, with a coating areal density of 26 mg/cm², and after drying, cold pressing, and slitting, a positive electrode plate was obtained.

### 3. Preparation of negative electrode plate

A negative electrode active material graphite, a thickener sodium carboxymethyl cellulose, a binder styrene-butadiene rubber, and a conductive agent acetylene black were mixed according to a mass ratio of 97:1:1:1, deionized water was added, and a negative electrode slurry was obtained under the action of a vacuum mixer. The negative electrode slurry was uniformly applied on a copper foil having a thickness of 8 µm. After drying, cold pressing, and slitting, a negative electrode plate was obtained.

### 4. Preparation of electrolyte

Solvents EC and DMC were mixed according to a mass ratio of 30:70, and after complete dissolution, LiPF₆ was added. Then VC and FEC were added, and after uniform mixing, an electrolyte having a LiPF₆ concentration of 1 mol/L and mass contents of VC and FEC of 3% respectively was obtained.

### 5. Separator

A polypropylene separator having a thickness of 12 µm was selected.

### 6. Preparation of lithium-ion battery

The electrode plates were placed in a high-temperature oven at 110°C and baked for 7 h to remove moisture in the electrode plates. The positive electrode plate, the separator, and the negative electrode plate were stacked in order such that the separator was located between the positive and negative electrode plates to play a role of separation. Then, they were wound into a prismatic bare cell, and was placed in an aluminum plastic film. A corresponding non-aqueous electrolyte was injected, and sealing was performed, followed by processes such as standing, hot and cold pressing, formation, clamping, and capacity grading, to obtain a lithium-ion battery.

### Examples 2-21

Preparation methods of secondary batteries of Examples 2-21 were similar to that of Example 1, but types and contents of doping elements in the lithium iron phosphate base material were adjusted, or the D50, carbon content, powder compacted density, BET, and the like of the positive electrode active material were adjusted. Different preparation parameters are detailed in Table 1, Table 2, and Table 3. According to chemical formulas of different lithium iron phosphate base materials in Table 1 to Table 3, types and mass proportions of different elements in the lithium iron phosphate base material can be obtained through conversion.

### Comparative Examples 1-6

Preparation methods of secondary batteries of Comparative Examples 1-6 were similar to that of Example 1, but types or contents of doping elements in the lithium iron phosphate base material were adjusted, or parameters of the carbon coating layer were adjusted. Different preparation parameters are detailed in Table 1, Table 2, and Table 3.

### II. Performance test

### 1. Test method for related parameters of positive electrode active material

(1) Test method for iron characteristic peak intensity, lithium characteristic peak intensity, and carbon characteristic peak intensity

X-ray photoelectron spectroscopy (X-ray photoelectron spectroscopy) test was used, all tests were performed in an Axis Supra/Supra+ X-ray photoelectron spectrometer, and the test standard was GB/T19500-2004. Peak heights and concentrations of three elementals Fe, Li, and C were all output through the ESCApe software.

### (2) Test method for average particle size D of particles

An X-ray powder diffractometer (X'pert PRO, USA) was used to measure the average particle size D, and the detailed test process was as follows:
(1) Measurement of measured width Bm of sample under test. An instrument scanning rate was set to 2 degrees/minute to obtain an XRD pattern of the sample under test. JADE software was used to subtract Cu Kα2 background to obtain Bm of each diffraction peak.
(2) Measurement of instrument broadening Bs.

A reference sample of the same substance as the sample under test and having a grain size of 5-20 µm was used. Under the same experimental conditions as the sample under test, an XRD pattern of the reference sample was measured, and Bs was obtained from the pattern.

(3) Calculation of full width at half maximum B. B = Bm - Bs. (Note: If B obtained is measured in angle, it needs to be converted into radians)

(4) Calculation of average particle size D. Scherrer formula D = Kλ/Bcosθ was used, where K was taken as 0.89, θ was a diffraction angle, λ = 0.154056 nm. By substituting B, a grain thickness D' in a normal direction of a crystal plane represented by a single diffraction peak was obtained. D' was calculated for multiple diffraction peaks respectively, and after taking an average value, the average particle size D of particles was obtained.

### (3) Test method for powder compacted density

1 g of lithium iron phosphate positive electrode active material in all examples and comparative examples was weighed respectively and added into a cylindrical mold, and a cross-sectional area of a circular hole of the mold was S. A pressure of 3 t was applied to the powder in the mold and held for 30s, and a powder thickness was recorded as t. Then, powder compacted densities ρ of lithium iron phosphate positive electrode active materials respectively corresponding to all examples and all comparative examples can be calculated through the following formula: ρ = m/(S × t).

### (4) Test method for carbon content

Positive electrode active materials in all the above examples and comparative examples were burned using a high-frequency induction furnace and then tested for carbon content by an infrared absorption method. The specific test process was based on the standard GB/T 20123-2006/ISO 15350:2000 "Steel and iron - Determination of Total Carbon and Sulfur Content - Infrared Absorption Method After Combustion in a High-Frequency Induction Furnace", and measurement was conveniently performed using a carbon-sulfur analyzer, such as a Dekai HCS infrared carbon-sulfur analyzer.

### (5) Test method for true specific surface area and apparent specific surface area

The specific surface area parameters were tested using a 3Flex specific surface area analyzer from Micromeritics, USA, and a total BET surface area of particle bodies, micropores, mesopores, and macropores was obtained by fitting through a T-Plot method, which was the apparent specific surface area.

True specific surface area = apparent specific surface area - BET1 - BET2. BET1 was a specific surface area of pore structures having a pore size of 2.0 nm to 100 nm or less obtained using the T-Plot method. BET2 was a specific surface area of mesopores and macropores, and was tested using a PCA-MP003 mercury porosimeter based on the standard GB/T 21650.1-2008.

### (6) Test method for iron dissolution rate

5 g of the lithium iron phosphate positive electrode active material was weighed, and 100 ml of 0.008 mol/L dilute hydrochloric acid was added. After they were left standing for 2 h, vacuum filtration was performed to take 1 ml of filtrate, which was diluted to 50 ml, and ICP-OES was used to test the Fe ion concentration in the filtrate.

### (7) Test method for powder resistivity

The powder resistivity of the positive electrode active material was tested using a powder resistivity tester (ST2722) based on the standard GB/T 30835-2014.

### (8) Test method for volume median particle size Dv50

The volume median particle size Dv50 referred to a standard process: GB/T19077-2016/ISO 13320:2009, and was measured using a Malvern 2000 (MasterSizer 2000) laser particle size analyzer. The specific test process was as follows: an appropriate amount of the lithium iron phosphate positive electrode active material was taken, 20 ml of deionized water was added (the sample concentration was controlled to ensure that an obscuration was 8-12%), and ultrasonic dispersion was performed for 5 min (53 KHz/120 W) to ensure complete dispersion of the sample. Then, samples of examples and comparative examples were measured respectively according to the GB/T19077-2016/ISO 13320:2009 standard.

### (9) Test method for degree of graphitization

Degree of graphitization test was characterized using a Raman spectrometer, a model of the Raman spectrometer used was InVia Qontor (Reflex), and a light source wavelength used was 532 nm. A spectrum in a range of 750-2000 cm-1 was intercepted, and baseline correction was performed before fitting the spectra with the following Gaussian function. Ai, vi, and wi were peak intensity, peak position, and peak width, respectively. Two peaks corresponding to the carbon coating layer can be fitted with four peaks, corresponding peak intensities were denoted as D2, D1, D3, and G, respectively, and then the degree of graphitization was D₁/G. $G \left(ν\right) = {A}_{i} exp \left[-4 ln\left(2\right){\left(\frac{ν - {ν}_{i}}{{w}_{i}}\right)}^{2}\right] ,$

However, since a test spot size of the Raman spectrometer was 0.5-1 µm, which was slightly smaller than a single LFP particle, there was a certain contingency. For this purpose, 100 points can be continuously and uniformly scanned in a 50 × 50 µm region by area scanning Raman spectroscopy to synchronously generate an I_{D}/I_{G} depth map in XY spatial directions, thereby improving uniformity and representativeness of testing.

### 2. Test method for related parameters of positive electrode plate

### (1) Test method for dehydration efficiency

Lithium iron phosphate positive electrode active materials, binders polyvinylidene fluoride (PVDF), and conductive agents acetylene black of examples and comparative examples were mixed respectively according to a mass ratio of 96.5:2.0:1.5, an appropriate amount of N-methylpyrrolidone (NMP) solvent was added, and mixing was performed with sufficient stirring to form a uniform positive electrode slurry. This slurry was applied on a carbon-coated aluminum foil having a positive electrode current collector thickness of 13 µm, with a coating areal density of 26 mg/cm², then drying and cold pressing were performed, and slitting was performed, to obtain a positive electrode plate. The electrode plate dish was placed in a humidity environment with 50% water content, and left standing to absorb water for 24 h to near saturation, and a punching device was used to punch small discs having a diameter of 1.4 cm, which were cut into small pieces of about 0.5 cm × 0.5 cm, and placed in a moisture testing instrument to test their water content as A ppm. Then, remaining electrode plates were placed in a vacuum oven, and in this process, sealed well with plastic bags to prevent the electrode plates from absorbing or desorbing moisture, followed by drying under conditions of 110°C and 7 h. Then, small circular electrode plates were likewise punched and cut into pieces to test their water content as B ppm, and a material dehydration rate was W = (A - B)/420 ppm/min.

### (2) Test method for compacted density

Electrode plates of examples and comparative examples were cut into film sheets having a length of 1000 mm, and the electrode plates were rolled under a certain pressure. Since aluminum foil has ductility, their film sheet lengths were made to be 1006 mm. Then, small discs of 1540.25 mm² were punched out of the film sheets, and a weight M and thickness L of the small disc were measured. Pure aluminum foil was punched into small discs of 1540.25 mm², and a mass M0 of empty aluminum foil was weighed. Then, compacted densities of positive electrode plates respectively corresponding to all examples and all comparative examples can be calculated through the following formula: PD = (M - M0)/1.54025/2/L.

### 3. Test method for battery performance

### (1) Test method for gram capacity

The positive electrode active material of Example 1, a binder polyvinylidene fluoride (PVDF), and a conductive agent acetylene black were mixed according to a weight ratio of 90:5:5, and an appropriate amount of N-methylpyrrolidone (NMP) solvent was added. They were sufficiently stirred and mixed to form a uniform positive electrode slurry. This slurry was applied on an aluminum foil having a positive electrode current collector thickness of 1 µm, and then drying and cold pressing were performed. Then, small discs having a diameter of 14 mm were punched to be used as positive electrode plates. Then, a lithium sheet as a negative electrode, a polypropylene separator having a thickness of 12 µm and the electrolyte in the example were used to assemble a button half-cell. This button half-cell was charged and discharged at rates of 0.1C and 1C respectively, and gram capacities under different rates were recorded. Test processes of comparative examples and other examples were the same as above.

### (2) Test method for energy density

Lithium-ion batteries of all examples and comparative examples were placed in an oven at 25°C, left standing for 2 h, and then subjected to charge-discharge tests. A charge-discharge was as follows: charged with a constant current of 1C to 3.65 V, and then charged at a constant voltage until a charging current was less than 0.05C; paused for 5 min; discharged with a constant current of 1C to 2.0 V; and paused for 5 min. The above was one charge-discharge of the battery. Mass energy density of battery cell (Wh/kg) = energy of third discharge/mass of lithium iron phosphate material active substance in battery.

### (3) Test method for cycling performance

Lithium-ion batteries of all examples and comparative examples were placed in an oven at 60°C, left standing for 2 h, and then subjected to charge-discharge tests. A charge-discharge cycle was as follows: charged with a constant current of 1C to 3.65 V, and then charged at a constant voltage until a charging current was less than 0.05C; paused for 5 min; discharged with a constant current of 1C to 2.5 V; and paused for 5 min. The above was one charge-discharge cycle of the battery, which was continuously repeated until the battery capacity decayed to 80% of an initial value, and the number of cycles was recorded.

### III. Analysis of test results of examples and comparative examples

Batteries of examples and comparative examples were prepared respectively according to the above methods, and various performance parameters were measured. Results are shown in Table 2 to Table 4 below.

**Table 1 Preparation parameters**

| No. | Positive electrode active material | |
|---|---|---|
| | Molecular formula | Powder resistivity (Ω·cm) |
| Example 1 | LiFe_{0.645}Ni_{0.25}Sn_{0.1}Ti_{0.003}V_{0.002}PO₄ | 16.8 |
| Example 2 | LiFe_{0.6}Ni_{0.25}Sn_{0.15}PO₄ | 24.7 |
| Example 3 | LiFe_{0.625}Ni_{0.25}Sn_{0.125}PO₄ | 18.8 |
| Example 4 | LiFe_{0.675}Ni_{0.25}Sn_{0.075}PO₄ | 11.4 |
| Example 5 | LiFe_{0.7}Ni_{0.25}Sn_{0.05}PO₄ | 9.6 |
| Example 6 | LiFe_{0.6}Ni_{0.30}Sn_{0.1}PO₄ | 8.5 |
| Example 7 | LiFe_{0.625}Ni_{0.275}Sn_{0.1}PO₄ | 13.5 |
| Example 8 | LiFe_{0.675}Ni_{0.225}Sn_{0.1}PO₄ | 23.7 |
| Example 9 | LiFe_{0.7}Ni_{0.2}Sn_{0.1}PO₄ | 27.8 |
| Example 10 | LiFe_{0.642}Ni_{0.25}Sn_{0.1}Ti_{0.005}V_{0.003}PO₄ | 15.3 |
| Example 11 | LiFe_{0.6435}Ni_{0.25}Sn_{0.1}Ti_{0.004}V_{0.0025}PO₄ | 16.2 |
| Example 12 | LiFe_{0.6465}Ni_{0.25}Sn_{0.1}Ti_{0.002}V_{0.0015}PO₄ | 20.3 |
| Example 13 | LiFe_{0.648}Ni_{0.25}Sn_{0.1}Ti_{0.001}V_{0.001}PO₄ | 28.9 |
| Example 14 | LiFe_{0.645}Ni_{0.3}Sn_{0.05}Ti_{0.003}V_{0.002}PO₄ | 13.4 |
| Example 15 | LiFe_{0.645}Ni_{0.275}Sn_{0.075}Ti_{0.003}V_{0.002}PO₄ | 15.3 |
| Example 16 | LiFe_{0.645}Ni_{0.225}Sn_{0.125}Ti_{0.003}V_{0.002}PO₄ | 17.9 |
| Example 17 | LiFe_{0.645}Ni_{0.2}Sn_{0.15}Ti_{0.003}V_{0.002}PO₄ | 19.5 |
| Example 18 | LiFe_{0.645}Ni_{0.3}Sn_{0.05}Ti_{0.003}V_{0.002}PO₄ | 19.8 |
| Example 19 | LiFe_{0.695}Ni_{0.225}Sn_{0.075}Ti_{0.003}V_{0.002}PO₄ | 11.2 |
| Example 20 | LiFe_{0.67}Ni_{0.2}Sn_{0.125}Ti_{0.003}V_{0.002}PO₄ | 16.5 |
| Example 21 | LiFe_{0.545}Ni_{0.3}Sn_{0.15}Ti_{0.003}V_{0.002}PO₄ | 9.8 |
| Comparative Example 1 | LiFe_{0.9}Mn_{0.1}PO₄ | 44.7 |
| Comparative Example 2 | LiFe_{0.9}Sn_{0.1}PO₄ | 63.2 |
| Comparative Example 3 | LiFe_{0.75}Ni_{0.25}PO₄ | 32.8 |
| Comparative Example 4 | LiFe_{0.55}Ni_{0.25}Sn_{0.2}PO₄ | 51.7 |
| Comparative Example 5 | LiFe_{0.55}Ni_{0.35}Sn_{0.1}PO₄ | 45.3 |
| Comparative Example 6 | LiFe_{0.998}Ni_{0.001}Sn_{0.0001}PO₄ | 103.7 |

**Table 2 Preparation or performance parameters**

| No. | | | Positive electrode active material | | |
|---|---|---|---|---|---|
| | D50 (µm) | Carbon content (%) | Powder compacted density (g/cm³) | True BET (m²/g) | Apparent BET (m²/g) |
| Example 1 | 1.21 | 1.33 | 2.55 | 11.915 | 13.080 |
| Example 2 | 0.86 | 1.28 | 2.24 | 14.270 | 16.271 |
| Example 3 | 1.03 | 1.25 | 2.31 | 12.210 | 13.704 |
| Example 4 | 1.29 | 1.35 | 2.41 | 11.270 | 12.330 |
| Example 5 | 1.37 | 1.33 | 2.53 | 11.530 | 11.789 |
| Example 6 | 1.44 | 1.37 | 2.68 | 13.290 | 13.620 |
| Example 7 | 1.13 | 1.34 | 2.64 | 13.573 | 14.440 |
| Example 8 | 1.1 | 1.31 | 2.52 | 12.412 | 14.500 |
| Example 9 | 1.09 | 1.30 | 2.47 | 13.216 | 14.800 |
| Example 10 | 1.18 | 1.32 | 2.49 | 13.347 | 14.124 |
| Example 11 | 1.2 | 1.33 | 2.51 | 11.495 | 12.454 |
| Example 12 | 1.22 | 1.33 | 2.55 | 11.198 | 12.428 |
| Example 13 | 1.23 | 1.34 | 2.56 | 11.284 | 12.693 |
| Example 14 | 1.52 | 1.35 | 2.70 | 8.9 | 9.428 |
| Example 15 | 1.3 | 1.33 | 2.60 | 10.623 | 11.337 |
| Example 16 | 1.1 | 1.31 | 2.50 | 13.564 | 14.905 |
| Example 17 | 0.7 | 1.28 | 2.40 | 15.312 | 16.994 |
| Example 18 | 0.81 | 1.27 | 2.21 | 14.50 | 16.29 |
| Example 19 | 1.12 | 1.30 | 2.61 | 12.00 | 12.90 |
| Example 20 | 1.24 | 1.28 | 2.56 | 11.00 | 12.22 |
| Example 21 | 1.45 | 1.32 | 2.73 | 9.50 | 10.00 |
| Comparative Example 1 | 0.99 | 1.26 | 2.32 | 12.136 | 13.380 |
| Comparative Example 2 | 1.13 | 1.19 | 2.46 | 12.011 | 13.774 |
| Comparative Example 3 | 1.28 | 1.31 | 2.51 | 11.897 | 12.862 |
| Comparative Example 4 | 1.16 | 1.27 | 2.44 | 11.96 | 13.318 |
| Comparative Example 5 | 1.29 | 1.33 | 2.41 | 10.891 | 12.088 |
| Comparative Example 6 | 1.71 | 1.25 | 2.31 | 9.41 | 11.550 |

**Table 3 Preparation or performance parameters**

| No. | Positive electrode active material | | | | Positive electrode plate |
|---|---|---|---|---|---|
| | Iron characteristic peak intensity/carbon characteristic peak intensity | Lithium characteristic peak intensity/carbon characteristic peak intensity | Iron dissolution rate (mg/L) | Degree of graphitization | Compacted density (g/cm³) |
| Example 1 | 0.012 | 0.009 | 3.8 | 1.013 | 2.58 |
| Example 2 | 0.014 | 0.01 | 3.7 | 1.039 | 2.34 |
| Example 3 | 0.011 | 0.01 | 3.9 | 1.021 | 2.42 |
| Example 4 | 0.017 | 0.011 | 3.9 | 1.005 | 2.58 |
| Example 5 | 0.017 | 0.012 | 4.1 | 0.971 | 2.6 |
| Example 6 | 0.009 | 0.008 | 3.3 | 0.981 | 2.61 |
| Example 7 | 0.011 | 0.009 | 3.5 | 1.002 | 2.6 |
| Example 8 | 0.017 | 0.011 | 4.1 | 1.022 | 2.54 |
| Example 9 | 0.02 | 0.013 | 4.8 | 1.031 | 2.51 |
| Example 10 | 0.015 | 0.009 | 3.5 | 1.001 | 2.48 |
| Example 11 | 0.015 | 0.01 | 3.7 | 1.009 | 2.52 |
| Example 12 | 0.017 | 0.012 | 4.4 | 1.026 | 2.57 |
| Example 13 | 0.022 | 0.011 | 5.2 | 1.032 | 2.59 |
| Example 14 | 0.01 | 0.006 | 3.6 | 1.007 | 2.68 |
| Example 15 | 0.015 | 0.009 | 3.5 | 1.001 | 2.48 |
| Example 16 | 0.015 | 0.006 | 4.2 | 1.021 | 2.49 |
| Example 17 | 0.016 | 0.009 | 5.2 | 1.027 | 2.41 |
| Example 18 | 0.023 | 0.0113 | 5.5 | 1.029 | 2.23 |
| Example 19 | 0.015 | 0.011 | 3.4 | 1.01 | 2.6 |
| Example 20 | 0.011 | 0.009 | 3.7 | 1.022 | 2.54 |
| Example 21 | 0.016 | 0.01 | 3.3 | 0.981 | 2.72 |
| Comparative Example 1 | 0.03 | 0.024 | 7.1 | 1.124 | 2.23 |
| Comparative Example 2 | 0.036 | 0.03 | 7.7 | 1.146 | 2.35 |
| Comparative Example 3 | 0.022 | 0.014 | 6.9 | 1.121 | 2.39 |
| Comparative Example 4 | 0.026 | 0.02 | 7.3 | 1.133 | 2.34 |
| Comparative Example 5 | 0.018 | 0.014 | 7.1 | 1.127 | 2.3 |
| Comparative Example 6 | 0.042 | 0.013 | 7.9 | 1.139 | 2.35 |

**Table 4 Performance parameters**

| No. | Performance of positive electrode plate | Battery performance | | |
|---|---|---|---|---|
| | Dehydration efficiency (ppm/min) | Battery gram capacity (mAh/g) | Energy density (Wh/kg) | Cycling capacity retention rate |
| Example 1 | 8.8 | 161.9 | 197.0 | 85.6% |
| Example 2 | 6.8 | 157.1 | 179.8 | 88.0% |
| Example 3 | 7.2 | 158.7 | 181.2 | 86.3% |
| Example 4 | 7.4 | 157.5 | 180.7 | 85.6% |
| Example 5 | 7.7 | 160.7 | 183.1 | 83.1% |
| Example 6 | 6.6 | 158.7 | 178.6 | 87.3% |
| Example 7 | 7.6 | 157.8 | 183.5 | 83.6% |
| Example 8 | 7.9 | 169.3 | 188.2 | 84.9% |
| Example 9 | 7.5 | 157.6 | 186.4 | 82.8% |
| Example 10 | 9.8 | 162.6 | 185.6 | 82.1% |
| Example 11 | 9.2 | 162.1 | 186.0 | 83.3% |
| Example 12 | 7.9 | 160.6 | 182.5 | 86.2% |
| Example 13 | 7.2 | 159.9 | 180.3 | 88.1% |
| Example 14 | 7.5 | 161.1 | 182.0 | 80.2% |
| Example 15 | 7.8 | 160.8 | 181.5 | 81.2% |
| Example 16 | 8.9 | 160.5 | 181.4 | 81.2% |
| Example 17 | 9.2 | 160.2 | 181.0 | 81.9% |
| Example 18 | 8.9 | 159.9 | 180.7 | 82.9% |
| Example 19 | 7.2 | 160.9 | 181.9 | 84.3% |
| Example 20 | 8.1 | 160.3 | 181.2 | 85.7% |
| Example 21 | 7.7 | 161.3 | 182.5 | 82.4% |
| Comparative Example 1 | 9.9 | 148.37 | 173.60 | 75.2% |
| Comparative Example 2 | 10.3 | 147.20 | 166.33 | 80.4% |
| Comparative Example 3 | 9.5 | 151.21 | 173.14 | 77.1% |
| Comparative Example 4 | 10.1 | 152.68 | 174.21 | 79.3% |
| Comparative Example 5 | 9.8 | 153.08 | 174.51 | 78.0% |
| Comparative Example 6 | 11.9 | 149.01 | 162.44 | 74.8% |

Elementals Sn and Ni are both added into the lithium iron phosphate base materials in Examples 1-21, and the surface of the lithium iron phosphate base material has a complete and dense carbon coating layer (when the powder resistivity under 8 MPa is controlled to be ≤30 Ω·cm). The prepared positive electrode active materials all have high gram capacities, the prepared positive electrode plates have good dehydration performance, and the prepared lithium secondary batteries all have both excellent energy density and cycling performance.

Elementals Sn and Ni are not added into the lithium iron phosphate base material of Comparative Example 1, but elemental Mn is added.

As seen from the comparison between Comparative Example 1 and Examples 1-21, adding elementals Sn and Ni into the lithium iron phosphate base material can effectively improve the gram capacity of the positive electrode active material, and improve the energy density and cycling performance of the lithium secondary battery. Whereas, adding other elementals (such as Mn) than Sn and Ni can neither improve the gram capacity of the positive electrode active material, nor improve the energy density and cycling performance of the lithium secondary battery.

One of elementals Sn and Ni is added into the lithium iron phosphate base materials of Comparative Examples 2-3: only elemental Sn is added into the lithium iron phosphate base material of Comparative Example 2, and only elemental Ni is added into the lithium iron phosphate base material of Comparative Example 3.

As seen from the comparison between Comparative Examples 2-3 and Examples 1-21, as compared with adding only one of Sn and Ni, adding both elementals Sn and Ni into the lithium iron phosphate base material can effectively improve the gram capacity of the positive electrode active material, and improve the energy density and cycling performance of the lithium secondary battery. Whereas, when only one of Sn and Ni is added, the improvement of battery performance is limited.

As seen from Examples 1-9, when the molar percentage of elemental Sn in the lithium iron phosphate base material is controlled to be 5%-15% and the molar percentage of elemental Ni is controlled to be 20%-30%, the positive electrode active material can have a high gram capacity, and the lithium secondary battery has good energy density and cycling performance. When the molar percentage of elemental Sn is 10% and the molar percentage of elemental Ni is 25%, the comprehensive performance of the battery is optimal.

In the lithium iron phosphate base material of Comparative Example 4, the molar percentage of elemental Sn is 20%, which exceeds the range of 5%-15%. In the lithium iron phosphate base material of Comparative Example 5, the molar percentage of elemental Ni is 35%, which exceeds the range of 20%-30%.

As seen from the comparison between Comparative Examples 4-5 and Examples 1-21, only when the contents of elemental Sn and elemental Ni in the lithium iron phosphate base material are controlled within certain ranges, the gram capacity of the positive electrode active material can be effectively improved, and the energy density and cycling performance of the lithium secondary battery can be improved. Whereas, when the molar percentage of elemental Sn exceeds the range of 5%-15%, or the molar percentage of elemental Ni exceeds the range of 20%-30%, the improvement of battery performance is small.

As seen from Examples 1 and 10-13, after elementals Sn and Ni are added into the lithium iron phosphate base material, elementals V and Ti are further introduced. This can further improve the gram capacity of the positive electrode active material, and further improve the energy density and cycling performance of the lithium secondary battery.

Meanwhile, as seen from Examples 1 and 10-13, the molar percentage of elemental Ti in the lithium iron phosphate base material needs to be controlled within the range of 0.1%-0.5%, and the molar percentage of elemental V in the lithium iron phosphate base material needs to be controlled within the range of 0.1%-0.3%. The prepared positive electrode active materials all have high gram capacities, and the prepared lithium secondary batteries all have excellent energy density and cycling performance.

As seen from Examples 1-21, when the carbon content of the positive electrode active material is controlled within the range of 1.28%-1.35%, the D50 is controlled within the range of 0.7-1.52 µm, and the powder compacted density is controlled within the range of 2.21-2.73 g/cm³, the prepared positive electrode active materials all have high gram capacities, and the prepared lithium secondary batteries all have excellent energy density and cycling performance.

As seen from Examples 1-21, when the powder resistivity of the positive electrode active material under 8 MPa is controlled to be ≤30 Ω·cm, it indicates that the carbon coating layer on the surface of the lithium iron phosphate base material is relatively complete and dense, the prepared positive electrode active materials all have high gram capacities, the prepared positive electrode plates have good dehydration performance, and the prepared lithium secondary batteries all have excellent energy density and cycling performance.

In the positive electrode active material of Comparative Example 6, the completeness and denseness of its carbon coating layer are poor. For example: its powder resistivity under 8 MPa is 103.7 Ω·cm, which exceeds the range of 28.9 Ω·cm.

As seen from the comparison between Comparative Example 6 and Examples 1-21, while the lithium iron phosphate base material is added with elementals Sn and Ni, its surface is also coated with a complete and dense carbon coating layer, so that the energy density and cycling performance of the lithium secondary battery can be effectively improved. Whereas, when the lithium iron phosphate base material is added with elementals Sn and Ni, but the completeness and denseness of the carbon coating layer applied on its surface are poor (for example, the powder resistivity is high, the iron dissolution rate is too fast, and the electrode plate dehydration efficiency is too high), the improvement of battery performance is small.

As seen from Examples 1-21, when the ratio of the iron characteristic peak intensity I_{Fe} to the carbon characteristic peak intensity I_{c} of the positive electrode active material is controlled to satisfy I_{Fe}/I_{c}≤0.023, or the ratio of the lithium characteristic peak intensity I_{Li} to the carbon characteristic peak intensity I_{c} of the positive electrode active material is controlled to satisfy I_{Li}/I_{c}≤0.013, or the iron dissolution rate of the positive electrode active material is controlled to be ≤5.5 mg/L, or the true BET value of the positive electrode active material is controlled within the range of 8.9-15.312 m²/g, or the apparent BET value is controlled within the range of 9.428-16.994 m²/g, or the degree of graphitization of the positive electrode active material is controlled to be ≤1.039, it indicates that the completeness and denseness of the carbon coating layer are good, and thus the prepared positive electrode plates have good dehydration performance, and the prepared lithium secondary batteries all have excellent energy density and cycling performance.

It should be noted that the present application is not limited to the embodiments. The embodiments are only examples, and embodiments having configurations substantially identical to technical ideas and exerting identical effects within the scope of the technical solutions of the present application are all included in the technical scope of the present application. In addition, within the scope of not departing from the gist of the present application, various modifications that can be thought of by those skilled in the art applied to the embodiments, and other modes constructed by combining some constituent elements in the embodiments are also included in the scope of the present application.

## Claims

1. A lithium iron phosphate positive electrode active material, **characterized in that** the positive electrode active material comprises a lithium iron phosphate base material, wherein a molar percentage of elemental Sn in the lithium iron phosphate base material is 5%-15%, and a molar percentage of elemental Ni in the lithium iron phosphate base material is 20%-30%; and
a powder resistivity of the positive electrode active material under 8 MPa is ≤30 Ω·cm.

2. The positive electrode active material according to claim 1, **characterized in that** the lithium iron phosphate base material has a molecular formula of LiₐFe_{b}P_{c}O_{d}SnₓNi_{y}Q_{q}, wherein Q comprises at least one of V, Ti, Cu, Cr, Zn, Pb, Ca, Co, Sr, and Nb, 0.99≤a≤1, 0.545≤b≤0.9, 0.99≤c≤1, 3.9≤d≤4, 0.05≤x≤0.15, 0.20≤y≤0.30, and 0≤q≤0.008.

3. The positive electrode active material according to claim 1 or 2, **characterized in that** the molar percentage of elemental Sn in the lithium iron phosphate base material is 7.5%-12.5%, and the molar percentage of elemental Ni in the lithium iron phosphate base material is 22.5%-27.5%.

4. The positive electrode active material according to claim 2, **characterized in that** 0.075≤x≤0.125, and 0.225≤y≤0.275.

5. The positive electrode active material according to any one of claims 1 to 4, **characterized in that** the powder resistivity of the positive electrode active material under 8 MPa is ≤20 Ω·cm.

6. The positive electrode active material according to any one of claims 1 to 5, **characterized in that** a molar percentage of elemental Ti in the lithium iron phosphate base material is 0.1%-0.5%, and a molar percentage of elemental V in the lithium iron phosphate base material is 0.1%-0.3%.

7. The positive electrode active material according to claim 6, **characterized in that** the lithium iron phosphate base material has a molecular formula of LiₐFe_{b}P_{c}O_{d}SnₓNi_{y}Ti_{z}Vₙ, wherein 0.99≤a≤1, 0.545≤b≤0.9, 0.99≤c≤1, 3.9≤d≤4, 0.05≤x≤0.15, 0.20≤y≤0.30, 0.001≤z≤0.005, and 0.001≤n≤0.003.

8. The positive electrode active material according to claim 6 or 7, **characterized in that** the molar percentage of elemental Ti in the lithium iron phosphate base material is 0.2%-0.4%, and the molar percentage of elemental V in the lithium iron phosphate base material is 0.15%-0.25%.

9. The positive electrode active material according to claim 7, **characterized in that** 0.002≤z≤0.004, and 0.0015≤n≤0.0025.

10. The positive electrode active material according to any one of claims 1 to 9, **characterized in that** the positive electrode active material further comprises elemental carbon, and calculated based on a total weight of the positive electrode active material, a carbon content of the positive electrode active material is 1.28%-1.35%.

11. The positive electrode active material according to claim 10, **characterized in that** the positive electrode active material comprises a carbon coating layer located on at least a part of a surface of the lithium iron phosphate base material.

12. The positive electrode active material according to any one of claims 1 to 11, **characterized in that** the positive electrode active material satisfies at least one selected from the following groups (1)-(4):
(1) a ratio of an iron characteristic peak intensity I_{Fe} to a carbon characteristic peak intensity I_{c} of the positive electrode active material satisfies I_{Fe}/I_{c}≤0.023, and a ratio of a lithium characteristic peak intensity I_{Li} to the carbon characteristic peak intensity I_{c} of the positive electrode active material satisfies I_{Li}/I_{c}≤0.013, wherein a peak position of the iron characteristic peak intensity I_{Fe} is at 706.7±0.5 eV, a peak position of the lithium characteristic peak intensity I_{Li} is at 54.9±0.5 eV, and a peak position of the carbon characteristic peak intensity I_{c} is at 285.0±0.5 eV;
(2) an iron dissolution rate of the positive electrode active material is ≤5.5 mg/L, wherein the iron dissolution rate is an iron ion concentration after the positive electrode active material is left standing in 0.008 mol/L hydrochloric acid at 25°C for 2 h;
(3) a value range of a true BET of the positive electrode active material is 8.9-15.312 m²/g, and a value range of an apparent BET of the positive electrode active material is 9.428-16.994 m²/g; and
(4) a degree of graphitization of the positive electrode active material is ≤1.039.

13. The positive electrode active material according to any one of claims 1 to 11, **characterized in that** the positive electrode active material satisfies at least one selected from the following groups (1)-(4):
(1) a ratio of an iron characteristic peak intensity I_{Fe} to a carbon characteristic peak intensity I_{c} of the positive electrode active material satisfies I_{Fe}/I_{c}≤0.015, and a ratio of a lithium characteristic peak intensity I_{Li} to the carbon characteristic peak intensity I_{c} of the positive electrode active material satisfies I_{Li}/I_{c}≤0.010, wherein a peak position of the iron characteristic peak intensity I_{Fe} is at 706.7±0.5 eV, a peak position of the lithium characteristic peak intensity I_{Li} is at 54.9±0.5 eV, and a peak position of the carbon characteristic peak intensity I_{c} is at 285.0±0.5 eV;
(2) an iron dissolution rate of the positive electrode active material is ≤4 mg/L, wherein the iron dissolution rate is an iron ion concentration after the positive electrode active material is left standing in 0.008 mol/L hydrochloric acid at 25°C for 2 h;
(3) a value range of a true BET of the positive electrode active material is 10-14 m²/g, and a value range of an apparent BET of the positive electrode active material is 11-15 m²/g; and
(4) a degree of graphitization of the positive electrode active material is ≤1.01.

14. The positive electrode active material according to any one of claims 1 to 13, **characterized in that** a volume average particle size D50 of the positive electrode active material is 0.7-1.52 µm.

15. The positive electrode active material according to any one of claims 1 to 13, **characterized in that** a volume average particle size D50 of the positive electrode active material is 1.1-1.3 µm.

16. The positive electrode active material according to any one of claims 1 to 13, **characterized in that** a powder compacted density of the positive electrode active material under 22.6 MPa is 2.21-2.73 g/cm³.

17. The positive electrode active material according to any one of claims 1 to 13, **characterized in that** a powder compacted density of the positive electrode active material under 22.6 MPa is 2.5-2.6 g/cm³.

18. A positive electrode plate, **characterized by** comprising a positive electrode current collector and a positive electrode active material provided on at least one surface of the positive electrode current collector, wherein the positive electrode active material is the positive electrode active material according to any one of claims 1 to 17.

19. The positive electrode plate according to claim 18, **characterized in that** a dehydration efficiency of the positive electrode plate is 6.6-9.8 ppm/min.

20. The positive electrode plate according to claim 18, **characterized in that** a dehydration efficiency of the positive electrode plate is 8-9 ppm/min.

21. The positive electrode plate according to claim 18, **characterized in that** a compacted density of the positive electrode plate is not lower than 2.23 g/cm³.

22. A lithium secondary battery, **characterized by** comprising the positive electrode plate according to any one of claims 18 to 21.

23. An electrical device, **characterized by** comprising the lithium secondary battery according to claim 22.
